# EUROPEAN PATENT SPECIFICATION

(11) **EP 3 643 951 B1**
(45) Date of publication and mention of the grant of the patent: **28.02.2024**
(21) Application number: 19205475.7
(22) Date of filing: 25.10.2019
(51) Int. Cl.: F16K 3/24, F16K 27/04, F16K 31/122, F16K 11/07, G05D 16/00, G05D 16/10, F02C 9/26, F02C 7/232, F16K 3/32

(54) **METHOD FOR MODIFYING VALVE ASSEMBLY**
VERFAHREN ZUR MODIFIZIERUNG EINER VENTILANORDNUNG
PROCÉDÉ DE MODIFICATION D'UN BOÎTIER DE SOUPAPES

(30) Priority: 25.10.2018 US 201816170299
(43) Date of publication of application: 29.04.2020
(73) Proprietor: Hamilton Sundstrand Corporation, Charlotte, NC 28217-4578 (US)
(72) Inventor: CARPENTER, Richard J., Gales Ferry, IL Illinois 06335 (US); BELONCIK, Scott J., Westfield, IL Illinois 01085 (US); RICKIS, Aaron, Longmeadow, IL Illinois 01106 (US); LE DUC, Zachary Allen Ray, Rockford, IL Illinois 61107 (US); FERRAROTTI, Michael, Durham, CT Connecticut 06422 (US)
(74) Representative: Dehns

(56) References cited:
- DE-A1-102010 008 167
- JP-A- S 588 875
- US-A1- 2012 048 398

## Description

### BACKGROUND

This application relates to a method of creating an adaptor sleeve for an existing valve design to modify the existing valve such that it may be used in a new set of operating conditions, or fit in a larger bore.

Valves are utilized in any number of applications. One standard type of valve is a spool valve wherein a piston may be biased by a spring within a sleeve. There are windows in the sleeve that selectively communicate with inlet and outlet ports, as the piston strokes through the sleeve.

Valves are typically designed for a particular application. As an example, the timing and desired flow through a particular valve controls the design of the windows.

However, it may be desirable to utilize a valve designed for one application in a distinct application.

Valve assemblies are disclosed in DE 102010008167, US 2012/048398 and JP S588875.

### SUMMARY

A method of modifying an existing valve assembly is provided as defined by claim 1.

A spool valve is also disclosed.

These and other features may be best understood from the following drawings and specification.

### BRIEF DESCRIPTION OF THE DRAWINGS

Figure 1 schematically shows an existing fuel control system.
Figure 2A shows a modified system according to this disclosure.
Figure 2B shows an alternative.
Figure 3 shows another feature.

### DETAILED DESCRIPTION

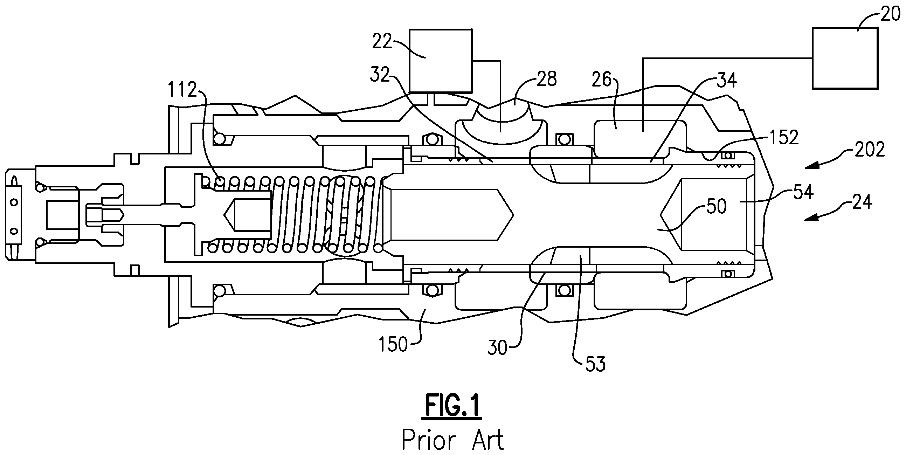

Figure 1 shows a fuel supply system. A fuel tank and pump 22 selectively sends fuel to a pressure regulating spool valve 24. The fuel enters a chamber 28, and is selectively delivered to a chamber 26 for passage to a downstream fuel system component 20. This is, of course, an oversimplification of a fuel supply system for a gas turbine engine.

The spool valve 24 includes an existing sleeve 30 having an inlet window 32 corresponding to chamber 28 and an outlet window 34 corresponding to chamber 26. A piston 50 is spring-biased by a spring 112 to move along an axis. A window or opening 53 in the piston 50 selectively connects windows 32 and 34. As known, pressurized fluid is supplied to a chamber 54 to cause the spool to move against the force of the spring 112 and control the flow of fluid. Valve 24 can be thought of as an existing valve assembly 202 and fits within a bore 152 in a housing 150.

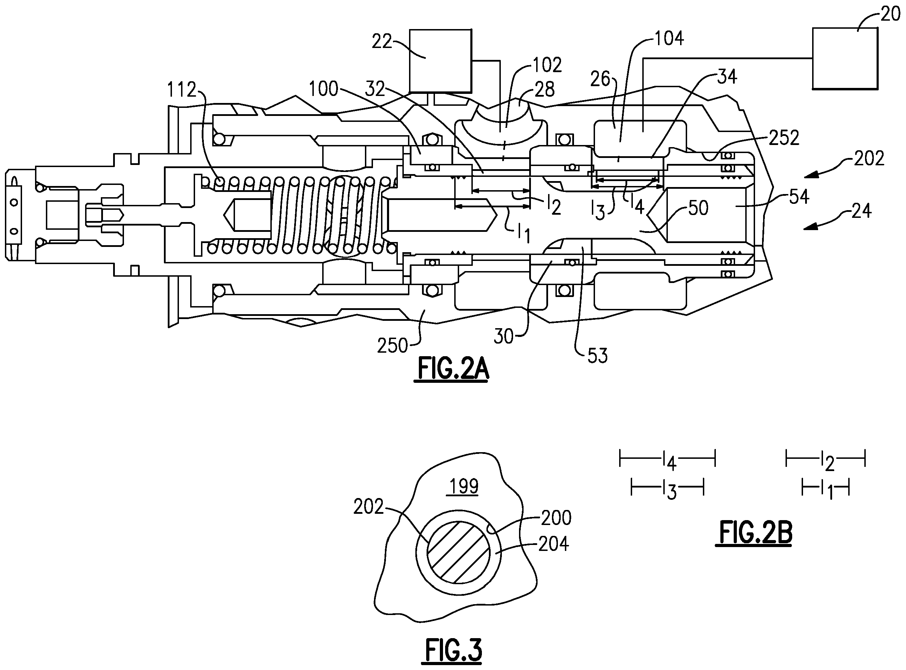

Figure 2A shows a supplemental sleeve 100 may be inserted into a bore 252 in a housing 250.

Figure 2A shows utilizing the existing valve assembly 202 into housing 250 wherein the bore 252 may be radially larger that bore 152 in Figure 1. To this end supplemental sleeve 100 is inserted into the bore 252 and then the existing valve assembly 202 may be inserted. In some applications the supplement sleeve 100 may be placed about the existing sleeve 30 prior to being inserted.

This allows a valve which has previously been designed for another application to be utilized into this new application and in this larger housing bore. This can allow variation in timing and other characteristics of the valve without requiring a complete design. This can also result in variation in flow characteristics such as flow, volume or pressure.

The piston window 53 would still communicate the existing sleeve inlet window to the existing sleeve outlet window, as originally designed. The supplemental sleeve can either modify a fluid signal such as flow, volume or pressure from the housing inlet window to the existing sleeve inlet window, and/or from the existing sleeve outlet window to the housing outlet window. Alternatively, there need not be any modification in the flow characteristic and merely being received and supported within the large bore is also a benefit of this disclosure.

Figure 3 shows a bore 201 in a housing 199 which has become too large for the existing valve assembly 202. This may occur through manufacturing error, wear, etc. The supplemental sleeve 204 shown here can actually be sized to take up the clearance in such cases, or may be any one of a number of standard sizes.

Also, by utilizing the supplemented sleeve 100, the relative size of the windows 102 and 104 can be changed relative to windows 32 and 34 to achieve a different schedule. As shown, the window 32 has a length l₁, while the window 102 has a larger length l₂. Similarly, the window 34 has a length l₃ whereas the window 104 has a larger length l₄. Since the lengths l₂ and l₄ are shorter than the lengths l₁ and l₃, the timing and volume of the flow through the valve may be changed to meet a desired application.

One may change the relative sizes of the window to vary the timing of porting from inlet to outlet, or alternatively to maintain existing timing and volume following the modification or repair of the housing.

Figure 2B shows an alternative wherein the lengths l₂ and l₄ are longer than the lengths l₁ and l₃. It may also be true that one of the supplemental sleeve windows is longer than one of the existing sleeve windows, and the other is the opposite.

Using a larger l₂ and l₄ may provide a same or similar flow volume and pressure, or may slightly modify the pressure drop. It could make the resulting sleeves somewhat lighter. Having a smaller l₂ and l₄ would allow modifying the performance characteristic of the valve then making windows 102 and 104 in the supplemental sleeve the regulating windows.

While a particular pressure regulating valve for a fuel application in a gas turbine engine is disclosed, the broad teachings of this method could extend to any number of other spool valve and piston valve applications.

A method of modifying an existing valve assembly, comprising the steps of:
(a) placing a supplemental sleeve within a housing, wherein the housing has a housing inlet window and a housing outlet window, and the supplemental sleeve has a sleeve inlet window and sleeve outlet window; and
(b) placing the existing valve assembly within the supplemental sleeve.

The housing inlet window and the housing outlet window are formed within the main body of a housing. The valve may be a metering valve, having a spring biasing the piston in one direction with the addition of a secondary pressure signal and a primary fluid pressure selectively biasing the piston in a direction opposed to the spring.

Although an embodiment of this invention has been disclosed, a worker of ordinary skill in this art would recognize that certain modifications would come within the scope of the invention as defined by the claims. For that reason, the following claims should be studied to determine the true scope of this invention.

## Claims

1. A method of modifying an existing valve assembly, comprising the steps of
(a) providing an existing valve assembly having an existing sleeve (30) with an inlet window (32) and an outlet window (34) and a piston (50) having an opening for selectively communicating the inlet window with the outlet window;
(b) providing a housing having a housing bore (252), wherein the housing has a housing inlet window (102) and a housing outlet window (104),
(c) placing a supplemental sleeve (100) within the housing bore (252),wherein said supplemental sleeve has a supplemental sleeve inlet window and supplemental sleeve outlet window; and
(d) placing the existing valve assembly, having the existing sleeve (30) within said supplemental sleeve, and the piston (50) opening selectively communicating the housing inlet window, via the supplemental sleeve, with the inlet window (32) of said existing sleeve to the outlet window (34) of said existing sleeve and then said supplemental sleeve outlet window and said housing outlet window, and said piston being moveable along an axial direction;
wherein said existing valve assembly has an existing flow volume and pressure, and said supplemental sleeve being designed to change at least one of said flow volume and pressure; wherein at least one of the supplemental sleeve inlet window and the supplemental sleeve outlet window has a different size from the existing sleeve inlet window and the existing sleeve outlet window to achieve the change in at least one of said flow volume and pressure; and
wherein said existing valve assembly is part of a spool valve in an engine fuel supply system.

2. The method as set forth in claim 1, wherein said existing valve assembly is a pressure regulating valve, having a spring (112) biasing said piston in one direction and wherein fluid pressure selectively biases said piston in a direction opposed to said spring.

3. The method as set forth in any preceding claim, wherein said housing bore is larger than a desired bore designed to receive said existing valve assembly and said supplement sleeve is designed to take up clearance between an outer periphery of said existing sleeve and an inner periphery of said inner housing bore.

## Patentansprüche

1. Verfahren zum Modifizieren einer vorhandenen Ventilanordnung, umfassend die Schritte:
(a) Bereitstellen einer vorhandenen Ventilanordnung, die eine vorhandene Hülse (30) mit einem Einlassfenster (32) und einem Auslassfenster (34) und einen Kolben (50) aufweist, der eine Öffnung zur selektiven Verbindung des Einlassfensters mit dem Auslassfenster aufweist;
(b) Bereitstellen eines Gehäuses, das eine Gehäusebohrung (252) aufweist, wobei das Gehäuse ein Gehäuseeinlassfenster (102) und ein Gehäuseauslassfenster (104) aufweist,
(c) Anordnen einer Zusatzhülse (100) in der Gehäusebohrung (252), wobei die Zusatzhülse ein Zusatzhülseneinlassfenster und ein Zusatzhülsenauslassfenster aufweist; und
(d) Anordnen der vorhandenen Ventilanordnung, die die vorhandene Hülse (30) aufweist, in der Zusatzhülse und die Öffnung des Kolbens (50) in selektiver Verbindung des Gehäuseeinlassfensters über die Zusatzhülse mittels des Einlassfensters (32) der vorhandenen Hülse mit dem Auslassfenster (34) der vorhandenen Hülse und dann mit dem Auslassfenster der zusätzlichen Hülse und dem Gehäuseauslassfenster, wobei der Kolben entlang einer axialen Richtung beweglich ist;
wobei die vorhandene Ventilanordnung ein vorhandenes Durchflussvolumen und einen vorhandenen Druck aufweist und die Zusatzhülse so ausgelegt ist, dass sie mindestens eines von Durchflussvolumen und Druck ändert; wobei mindestens eines von dem Zusatzhülseneinlassfenster und dem Zusatzhülsenauslassfenster eine andere Größe als das Einlassfenster der vorhandene Hülsen und das Auslassfenster der vorhandene Hülsen aufweist, um die Änderung von dem mindestens einen von Durchflussvolumen und Druck zu erreichen; und
wobei die vorhandene Ventilanordnung Teil eines Schieberventils in einem Motorkraftstoffversorgungssystem ist.

2. Verfahren nach Anspruch 1, wobei die vorhandene Ventilanordnung ein Druckregelungsventil ist, das eine Feder (112) aufweist, die den Kolben in eine Richtung vorspannt, und wobei der Fluiddruck den Kolben selektiv in eine zu der Feder entgegengesetzte Richtung vorspannt.

3. Verfahren nach einem der vorhergehenden Ansprüche, wobei die Gehäusebohrung größer ist als eine gewünschte Bohrung, die zum Aufnehmen der vorhandenen Ventilanordnung ausgelegt ist, und die Zusatzhülse so ausgelegt ist, dass sie Spielraum zwischen einem Außenumfang der vorhandenen Hülse und einem Innenumfang der inneren Gehäusebohrung ausfüllt.

## Revendications

1. Procédé de modification d'un ensemble soupape existant, comprenant les étapes de :
(a) fourniture d'un ensemble soupape existant ayant un manchon existant (30) avec une fenêtre d'entrée (32) et une fenêtre de sortie (34) et un piston (50) ayant une ouverture pour faire communiquer sélectivement la fenêtre d'entrée avec la fenêtre de sortie ;
(b) fourniture d'un boîtier ayant un alésage de boîtier (252), dans lequel le boîtier possède une fenêtre d'entrée de boîtier (102) et une fenêtre de sortie de boîtier (104),
(c) placement d'un manchon supplémentaire (100) à l'intérieur de l'alésage du boîtier (252), dans lequel ledit manchon supplémentaire possède une fenêtre d'entrée de manchon supplémentaire et une fenêtre de sortie de manchon supplémentaire ; et
(d) placement de l'ensemble soupape existant, ayant le manchon existant (30) à l'intérieur dudit manchon supplémentaire, et l'ouverture du piston (50) faisant communiquer sélectivement la fenêtre d'entrée du boîtier, par le biais du manchon supplémentaire, avec la fenêtre d'entrée (32) dudit manchon existant à la fenêtre de sortie (34) dudit manchon existant, puis à ladite fenêtre de sortie de manchon supplémentaire et à ladite fenêtre de sortie du boîtier, et ledit piston étant mobile le long d'une direction axiale ;
dans lequel ledit ensemble soupape existant présente un volume d'écoulement et une pression existants, et ledit manchon supplémentaire est conçu pour modifier au moins l'un desdits volume d'écoulement et pression ; dans lequel au moins l'une de la fenêtre d'entrée de manchon supplémentaire et de la fenêtre de sortie de manchon supplémentaire présente une taille différente de la fenêtre d'entrée de manchon existante et de la fenêtre de sortie de manchon existante pour obtenir le changement d'au moins l'un desdits volume d'écoulement et pression ; et
dans lequel ledit ensemble soupape existant fait partie d'une soupape à tiroir dans un système d'alimentation en carburant de moteur.

2. Procédé selon la revendication 1, dans lequel ledit ensemble soupape existant est une soupape de régulation de pression, ayant un ressort (112) sollicitant ledit piston dans une direction et dans lequel la pression du fluide sollicite sélectivement ledit piston dans une direction opposée audit ressort.

3. Procédé selon une quelconque revendication précédente, dans lequel ledit alésage du boîtier est plus grand qu'un alésage souhaité conçu pour recevoir ledit ensemble soupape existant et ledit manchon supplémentaire est conçu pour combler le jeu entre une périphérie externe dudit manchon existant et une périphérie interne dudit alésage intérieur du boîtier.
